(19)

Europäisches
Patentamt
European
Patent Office
Office européen
des brevets

(11) **EP 3 890 079 A1**

(12) **EUROPEAN PATENT APPLICATION**
published in accordance with Art. 153(4) EPC

(43) Date of publication:
**06.10.2021 Bulletin 2021/40**

(21) Application number: **19888276.3**

(22) Date of filing: **25.11.2019**

(51) Int Cl.:
*H01M 8/0243* $^{(2016.01)}$     *H01M 8/0239* $^{(2016.01)}$
*H01M 8/1051* $^{(2016.01)}$     *H01M 8/1081* $^{(2016.01)}$
*H01M 8/18* $^{(2006.01)}$

(86) International application number:
**PCT/KR2019/016242**

(87) International publication number:
**WO 2020/111689 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2018 KR 20180151389**

(71) Applicant: **Lotte Chemical Corporation
Seoul, 05551 (KR)**

(72) Inventors:
• **JUNG, Min Suk**
**Daejeon 34110 (KR)**
• **KIM, Hye Seon**
**Daejeon 34110 (KR)**
• **KANG, In Bo**
**Daejeon 34110 (KR)**
• **PARK, Hee Man**
**Daejeon 34110 (KR)**
• **PARK, Sang Sun**
**Daejeon 34110 (KR)**

(74) Representative: **Germain Maureau
12, rue Boileau
69006 Lyon (FR)**

(54) **RESIN COMPOSITION FOR REDOX FLOW BATTERY SEPARATOR, METHOD FOR PRODUCING REDOX FLOW BATTERY SEPARATOR USING SAME, AND REDOX FLOW BATTERY SEPARATOR**

(57) The present invention relates to a resin composition for a redox flow battery separator, and a method for producing a redox flow battery separator using same. The resin composition comprises: a polyolefin-based resin; a fumed silica; a compatibilizing agent including at least one selected from the group consisting of a maleic anhydride graft-polyethylene, a maleic acid graft-polyethylene, an alkyl maleate graft-polyethylene, a maleamic acid graft-polyethylene, and polyethylene oxide; and a pore former.

[Fig. 2]

Example 1

SU8220 13.0kV 16.4mmx10.0K SE(U) 10/25/2018     5.00 μm

EP 3 890 079 A1

**Description**

[Technical Field]

The present invention relates to a resin composition for a redox flow battery separator, a method for producing a redox flow battery separator using the same, and a redox flow battery separator.

[Background Art]

As existing power generation systems such as thermal power generation, which causes large amounts of greenhouse gases using fossil fuels or nuclear power generation having problems with the stability of facilities themselves or waste disposal reveal various limitations, studies on the development of energy that is more eco-friendly and highly efficient and the development of a power supply system that uses the energy have been increasing significantly.
In particular, since power storage technology can make renewable energy, which is greatly affected by external conditions, more diverse and widely available and enhance the efficiency of power utilization, development is being concentrated of these technical fields, and among them, interest in secondary batteries and research and development thereof have increased significantly.
A redox flow battery refers to an oxidation/reduction battery capable of directly converting the chemical energy of an active material into electrical energy, and is an energy storage system capable of storing new renewable energy with severe output fluctuations depending on external environments such as sunlight and wind power and converting the energy into high-quality electric power. Specifically, in a redox flow battery, an electrolytic solution including an active material that causes a redox reaction circulates between an electrode and a storage tank, and charging/discharging proceeds.
Such a redox flow battery basically includes a tank in which an electrolytic solution is stored, a pump that circulates the electrolytic solution, and a unit cell partitioned with a separator, and the unit cell includes an electrode, an electrolytic solution, and a separator.
A separator for a redox flow battery is a key material that serves to allow ions to move, and to isolate active materials in a charged state. Currently, it is common to use a separator for another secondary battery such as a lithium battery as a separator used in a redox flow battery, but there is a problem in that the self-discharge and energy efficiency deteriorates because active materials in a charged state easily cross-over. That is, a separator typically used in a redox flow battery is vulnerable to crossover of charged active materials, and a crossover phenomenon of active materials causes problems of self-discharge, an imbalance of electrolytic solution levels, and deterioration in energy efficiency.
US Patent No. 4190707 or Korean Patent No. 1042931 discloses a microporous separator for an alkaline battery or a secondary battery, but does not suggest a method which enables such a porous separator in the related art to prevent the crossover of ions between an anode electrolytic solution and a cathode electrolytic solution required for a redox flow battery, and the like.
Therefore, there is a need for developing a separator which enables ions for maintaining electrochemical neutrality to easily move, and can reduce the crossover of active materials causing self-discharge.

[Related Art Documents]

[Patent Document]

(Patent Document 1) US Patent No. 4190707
(Patent Document 2) Korean Patent No. 1042931

[Disclosure]

[Technical Problem]

The present invention has been made in an effort to provide a resin composition for producing a redox flow battery separator which can suppress the crossover of active materials in an electrolytic solution by enhancing the miscibility of a polyolefin-based resin and fumed silica and suppressing the formation of large pores, a method for producing a redox flow battery separator using the same, and a redox flow battery flow battery.

[Technical Solution]

An exemplary embodiment of the present invention provides a resin composition for a redox flow battery separator, the resin composition including: a polyolefin-based resin; fumed silica; a compatibilizing agent including at least one selected from the group consisting of a maleic anhydride graft-polyethylene, a maleic acid graft-polyethylene, an alkyl maleate graft-polyethylene, a maleamic acid graft-polyethylene, and polyethylene oxide; and a pore former.

Another exemplary embodiment of the present invention provides a method for producing a redox flow battery separator, the method including: (a) forming a sheet-shaped composite membrane using the resin composition for a redox flow battery separator; and (b) forming a plurality of pores in the composite membrane by removing a pore former in the composite membrane.

Still another exemplary embodiment of the present invention provides a redox flow battery separator produced using the method for producing a redox flow battery separator.

Yet another exemplary embodiment of the present invention provides a redox flow battery including the redox flow battery separator.

[Advantageous Effects]

A redox flow battery separator according to an exemplary embodiment of the present invention can suppress the crossover of active material in an electrolytic solution by minimizing the proportion of large pores having a diameter of more than 50 nm.

A resin composition for a redox flow battery separator according to an exemplary embodiment of the present invention has excellent miscibility of a polyolefin-based resin and fumed silica, and thus can improve the surface uniformity of a produced redox flow battery separator.

[Description of Drawings]

FIG. 1 illustrates a conceptual view of a general zinc-bromine redox flow battery.

FIG. 2 illustrates an FE-SEM image of the surface of a separator according to Example 1.

FIG. 3 illustrates an FE-SEM image of the surface of a separator for a redox flow battery according to Comparative Example 1.

[Modes of the Invention]

When one member is disposed "on" another member in the present specification, this includes not only a case where the one member is brought into contact with another member, but also a case where still another member is present between the two members.

When one part "includes" one constituent element in the present specification, unless otherwise specifically described, this does not mean that another constituent element is excluded, but means that another constituent element may be further included.

As used herein, the unit "part by weight" may refer to a weight ratio between respective components.

In the present specification, a weight average molecular weight (g/mol) may be a value converted with respect to polystyrene as determined by gel permeation chromatography (GPC).

In the present specification, the thickness of a member may be measured using a micrometer.

The present inventors confirmed that when a predetermined compatibilizing agent was applied to a resin composition including a polyolefin-based resin, fumed silica and a pore former, it was possible to manufacture a separator in which the surface uniformity of the separator was enhanced by alleviating an agglomeration phenomenon of the fumed silica and large pores of more than 50 nm were remarkably decreased, thereby completing the invention to be described below.

Hereinafter, the present invention will be described in detail.

An exemplary embodiment of the present invention provides a resin composition for a redox flow battery separator, the resin composition including: a polyolefin-based resin; fumed silica; a compatibilizing agent including at least one selected from the group consisting of a maleic anhydride graft-polyethylene, a maleic acid graft-polyethylene, an alkyl maleate graft-polyethylene, a maleamic acid graft-polyethylene, and polyethylene oxide; and a pore former.

The compatibilizing agent may decrease the agglomeration of the fumed silica by improving the compatibility of the olefin-based resin and the fumed silica. Furthermore, the compatibilizing agent may contribute to the improvement in efficiency of the redox flow battery by increasing the proportion of fine pores of a redox flow battery separator to be produced and significantly decreasing the proportion of large pores having a diameter of, particularly, more than 50 nm to suppress the crossover of an electrolytic solution when the redox flow battery is driven. Further, the compatibilizing agent may improve the surface uniformity of a redox flow battery separator to be produced to enable the stable driving of a redox flow battery and contribute to an improvement in durability and efficiency thereof.

According to an exemplary embodiment of the present invention, the compatibilizing agent may be a maleic anhydride graft-polyethylene.

According to an exemplary embodiment of the present invention, a content of the compatibilizing agent may be 1 part by weight or more and 40 parts by weight or less, based on 100 parts by weight of the polyolefin-based resin. Specifically, the content of the compatibilizing agent may be 5 parts by weight or more and 30 parts by weight or less, 7 parts by weight or more and 25 parts by weight or less, or 10 parts by weight or more and 20 parts by weight or more, based on 100 parts by weight of the polyolefin-based resin. When the content of the compatibilizing agent is within the above range, the mixability of the resin composition may be improved, and furthermore, may prevent the occurrence of crossover in the redox flow battery by preventing the pore size and porosity from being excessively increased.

According to an exemplary embodiment of the present invention, the polyolefin-based resin may include at least one selected from the group consisting of polyethylene, polypropylene and an ethylene-propylene copolymer. Specifically, the polyolefin-based resin may be polyethylene.

According to an exemplary embodiment of the present invention, the polyolefin-based resin may have a weight average molecular weight of 100,000 g/mol or more and 10,000,000 g/mol or less. Specifically, the polyolefin-based resin may have a weight average molecular weight of 500,000 g/mol or more and 10,000,000 g/mol or less. When the polyolefin-based resin has a weight average molecular weight within the above range, there is an advantage in that it is possible to secure resistance to a redox couple such as bromine which may be used in a redox flow battery and high mechanical properties. Furthermore, when the polyolefin-based resin has a weight average molecular weight within the above range, there is an advantage in that the compatibility of the fumed silica and the pore former in the resin composition is excellent and processing is facilitated.

The fumed silica may smoothly disperse the polyolefin resin and melt-knead the polyolefin resin, enable the uniform distribution of pores in a separator which will be produced, and may easily adjust the size of the pores.

The fumed silica may be prepared by thermally decomposing silane tetrachloride ($SiCl_4$) at a high temperature (about 1,100°C), or may be prepared by a method of heating silica under vacuum at a high temperature and decomposing the heated silica on a cold surface. However, the method is not limited thereto, and the fumed silica may be prepared by another method known in the art. The fumed silica described above may be distinguished from precipitated silica.

According to an exemplary embodiment of the present invention, the fumed silica may be hydrophilic fumed silica. Alternatively, the fumed silica may be a mixed silica of hydrophilic fumed silica and hydrophobic fumed silica.

The hydrophilic fumed silica may serve to adjust the degree of permeation of an electrolytic solution into the redox flow battery separator, and the hydrophobic fumed silica may serve to enable a composite separator to control the crossover of active materials in an electrolytic solution. As an example, it is possible to adjust the permeation of an electrolytic solution into a separator and the crossover of active materials in an electrolyte by simultaneously applying the hydrophilic fumed silica and the hydrophobic fumed silica.

According to an exemplary embodiment of the present invention, a content of the fumed silica may be 50 parts by weight or more and 200 parts by weight or less, based on 100 parts by weight of the polyolefin-based resin. Specifically, the content of the fumed silica may be 75 parts by weight or more and 150 parts by weight or less, or 90 parts by weight or more and 110 parts by weight or less, based on 100 parts by weight of the polyolefin-based resin.

According to an exemplary embodiment of the present invention, a content of the hydrophilic fumed silica and the hydrophobic fumed silica may each be 25 parts by weight to 100 parts by weight, specifically, 35 parts by weight to 75 parts by weight, or 45 parts by weight to 55 parts by weight, based on 100 parts by weight of the polyolefin-based resin.

According to an exemplary embodiment of the present invention, a weight ratio of the hydrophilic fumed silica and the hydrophobic fumed silica may be 1 : 5 to 5 : 1 or 1 : 3 to 3 : 1.

When the content and/or weight ratio of the hydrophilic fumed silica and the hydrophobic fumed silica are/is within the above range, the voltage efficiency of a redox flow battery may be improved by adjusting the porosity of the composite separator for a redox flow battery so as not to be excessively low, and the self-discharge phenomenon due to the crossover of active materials may be minimized by appropriately controlling the pore size.

The hydrophilic fumed silica may be fumed silica in which a hydrophilic functional group is bonded to the surface thereof. Specifically, the hydrophilic fumed silica may include fumed silica particles to which one or more hydrophilic functional groups selected from the group consisting of a hydroxyl group, a carboxyl group, an ether group, a sulfide group, an ester group, an ethoxy group, a phosphonyl group, a phosphinyl group, a sulfonyl group, s sulfinyl group, a sulfonic acid group, a sulfinic acid group, a phosphoric acid group, a phosphonic acid group, an amino group, an amide group, a quaternary ammonium group, and a quaternary phosphonium group are bonded.

The hydrophobic fumed silica may be fumed silica having a hydrophobic functional group in which a functional group is bonded to the surface thereof. The hydrophobic fumed silica may have a bonded hydrophobic functional group including an aliphatic functional group, an alicyclic functional group or an aromatic functional group of an alkyl, alkenyl, or alkynyl, and more specifically, may include fumed silica particles to which one or more hydrophobic functional groups selected from the group consisting of an aliphatic functional group having 1 to 30 carbon atoms, an alicyclic functional group having 4 to 30 carbon atoms, or an aromatic functional group having 6 to 40 carbon atoms are bonded.

According to an exemplary embodiment of the present invention, the fumed silica may include agglomerated particles. Specifically, the fumed silica may include agglomerated particles containing primary particles having an average particle diameter of 1 nm to 100 nm. More specifically, the primary particles included in the agglomerated particles may have an average particle diameter of 1 nm to 50 nm, or 5 nm to 20 nm.

In addition, the hydrophilic fumed silica and the hydrophobic fumed silica may each include the agglomerated particles. The agglomerated particles enable each component in the resin composition to be easily mixed, and enables pores of the composite separator for a redox flow battery to be uniformly distributed. Furthermore, a decrease in energy density of the redox flow battery may be minimized by effectively preventing the crossover of active materials in an electrolytic solution.

The primary particles included in the agglomerated particles have a three-dimensional bond structure of siloxane and have a spherical shape without fine pores, and the primary particles may form agglomerated particles while being each agglomerated or bonded to each other by siloxane bonds. When the primary particles included in the agglomerated particles have an average particle diameter within the above range, the pore size of the redox flow battery separator is appropriately adjusted, so that the voltage efficiency of a redox flow battery may be improved by preventing the crossover of active materials in the electrolytic solution and allowing the electrolytic solution to smoothly permeate.

According to an exemplary embodiment of the present invention, the fumed silica may have a nitrogen adsorption Brunauer-Emmett-Teller (BET) specific surface area of 1 $m^2$/g to 500 $m^2$/g. When the fumed silica has a BET specific surface area within the above range, there is an advantage in that the crossover of active materials in the electrolytic solution can be prevented by forming an internal pore diameter of the separator to be small.

According to an exemplary embodiment of the present invention, the pore former may be a mineral oil having a specific gravity of 1 or less and a viscosity of 200 cp or less. When the specific gravity and viscosity of the mineral oil are within the above ranges, the compatibility with another component in the resin composition may be excellent.

Although specific examples of the mineral oil are not limited, it is possible to use, for example, hydrocarbons such as liquid paraffin or paraffin wax, esters such as dioctyl phthalate and dibutyl phthalate, and the like.

According to an exemplary embodiment of the present invention, a content of the pore former may be 50 parts by weight or more and 500 parts by weight or less, based on 100 parts by weight of the polyolefin-based resin. Specifically, the content of the pore former may be 100 parts by weight or more and 400 parts by weight or less, 200 parts by weight or more and 400 parts by weight or less, or 250 parts by weight or more and 350 parts by weight or more, based on 100 parts by weight of the polyolefin-based resin. When the content of the pore former is within the above range, the processability and moldability of the composite separator may be improved, and furthermore, pore characteristics such as pore distribution and the number of pores may be appropriately adjusted.

According to an exemplary embodiment of the present invention, the resin composition for a redox flow battery separator may not include a silane coupling agent.

According to an exemplary embodiment of the present invention, the resin composition for a redox flow battery separator may further include at least one additive of an antioxidant and a porosity improver.

According to an exemplary embodiment of the present invention, the antioxidant may include: a primary oxidant such as a phenol-based antioxidant and an amine-based antioxidant; a secondary antioxidant such as a phosphorus-based antioxidant and a sulfur-based antioxidant; or a mixture thereof, as an antioxidant.

The phenol-based antioxidant may be selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediol bis-(3,5-di-t-butyl-4-hydroxyphenyl)propionate], 2,2-thiodiethylene bis-(3,5-di-t-butyl-4-hydroxyphenyl)propionate], pentaerythrityl-tetrakis-(3,5-di-t-butyl-4-hydroxyphenyl)propionate], 3,5-di-t-butyl-4-hydroxybenzylphosphonate diethylester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)proionyloxy ethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis,1-dimethyl-2-{β-(3-t-butyl-4-hydroxy-5-methyl-phenyl)propionyl oxy}ethyl]-2,4,8, 10-tetraoxaspiro,5]undecane, 2,2-bis-(2-3,5-di-t-butyl-4-hydroxyhydrocinnamoyloxy)ethoxyphenyl]propane, and β-(3,5-di-t-butyl-4-hydroxyphenyl)propionic acid stearyl ester. However, the phenol-based antioxidant is not limited thereto.

The amine-based antioxidant may be selected from the group consisting of N,N'-bis(1-ethyl 3-methylpentyl)-p-phenylenediamine, N,N'-bis(1-methylheptyl)-p-phenylenediamine, N,N'-dicyclohexyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, 1,2-bis[(2-methylphenyl)amino]ethane, 1,2-bis(phenyl-amino)propane, (o-tolyl)biguanide, bis-(1',3'-dimethylbutyl)phenyl]amine, tert-octylated N-phenyl-1-naphthylamine, a mixture of mono- and di-alkylated tert-butyl/tert-octyldiphenyl-amines, a mixture of mono- and di-alkylated nonyldiphenylamines, a mixture of mono- and di-alkylated dodecyldiphenylamines, a mixture of mono- and di-alkylated isopropyl/isohexyl-diphenylamines, a mixture of mono- and di-alkylated tert-butyldiphenylamines, 2,3-dihydro-3,3-dimethyl-4H-1,4-benzothiazine, phenothiazine, a mixture of mono- and di-alkylated tert-butyl/tert-octylphenothiazines, a mixture of mono- or di-alkylated tert-octyl-phenothiazines, N-allylphenothiazine and N,N,N',N'-tetraphenyl-1,4-diamino but-2-ene. However, the amine-based antioxidant is not limited thereto.

The phosphorus-based antioxidant may be selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl)phosphite, hydrogenated-4,4'-isopropylidenediphenol polyphosphite, phenyl(4,4'-isopropylidenediphenol)pentaerythritol diphosphite, distearyl pentaerythritol diphosphite diphosphite, tris,4'-isopropylidenebis(2-t-butylphenol)] phosphite, di(isodecyl)phenyl phosphite, 4,4'-isopropylidenebis (2-t-butylphenol)bis(nonylphenyl) phosphite, bis(2,4-di-t-butyl-6-methylphenyl)ethyl phosphite, 2-[{2,4,8,10-tetra-t-butyldibenz[d,f].3.2]-dioxa-phosphephin-6-yl}oxy]-N,N-bis-[{2,4,8,10-tetra-t-butyl-dibenz[d,f].3.2]-dioxaphosphephin-6-yl}oxy]ethyl]-ethanamine, and 6-[3-(3-t-butyl-4-hydroxy-5-methylphenyl)propoxy]-2,4,8,10-tetra-t-butyldibenz[d,f][1.3.2]-dioxaphosphephine. However, the phosphorus-based antioxidant is not limited thereto.

The sulfur-based antioxidant may be selected from the group consisting of dialkyl thiodipropionates such as dilauryl thiodipropionate, dimyristyl thiodipropionate and distearyl thiodipropionate; a polyhydric alcohol (for example, glycerin, trimethylolethane, trimethylolpropane, pentaerythritol or trishydroxyethyl isocyanurate) ester(pentaerythryl tetrakis-3-laurylthiopropionate) of an alkylthiopropionic acid such as butyl thiopropionic acid, octyl thiopropionic acid, lauryl thiopropionic acid and stearyl thiopropionic acid. However, the sulfur-based antioxidant is not limited thereto.

As the porosity improver, those known in the art can be applied without limitation as long as they do not allow the performance of the resin composition for the redox flow battery separator to deteriorate.

According to an exemplary embodiment of the present invention, the additive may be included in a content which does not allow the performance of the resin composition for a redox flow battery separator to deteriorate and may improve the performance by the additive. For example, the content of the additive may each be 0.05 part by weight or more and 5 parts by weight or less based on 100 parts by weight of the resin composition.

Another exemplary embodiment of the present invention provides a method for producing a redox flow battery separator, the method including: (a) forming a sheet-shaped composite membrane using the resin composition for a redox flow battery separator; and (b) forming a plurality of pores in the composite membrane by removing a pore former in the composite membrane.

According to an exemplary embodiment of the present invention, Step (a) may form a sheet-shaped composite membrane by melt-kneading the resin composition, and then extruding the melt-kneaded resin composition. Specifically, Step (a) may include: (a1) preparing a pellet by melt-kneading the resin composition; and (a2) forming a sheet-shaped composite membrane by extruding the prepared pellet.

In Step (a), various molding methods and devices known in the art may be used. For example, in Step (a1), a pellet may be prepared by melt-kneading the resin composition at a temperature within a range of 150°C to 250°C for 1 minute to 60 minutes, and then solidifying the melt-kneaded resin composition. Further, Step (a2) may form the prepared pellet into a sheet shape by being extruded through a T-die, and the like.

The melt-extruded product formed into the sheet shape may be cooled to a temperature sufficiently lower than the crystallization temperature of the resin by being brought into contact with a thermal conductor. Further, in order to prevent inorganic particles finely dispersed in the melt-kneading process from being agglomerated in the sheet forming process, the temperature until the melt-extruded product is transferred and formed into a sheet shape may need to be set at a temperature higher than the set temperature of the melt-kneading process.

Step (b) may allow a plurality of pores to be formed inside the sheet-shaped composite membrane by washing the sheet-shaped composite membrane with an organic solvent such as methylene chloride, toluene, ethanol, and acetone to remove the remaining pore former. That is, the pore former may serve as a pore-former.

Still another exemplary embodiment of the present invention provides a redox flow battery separator produced using the method for producing a redox flow battery separator.

According to an exemplary embodiment of the present invention, in the redox flow battery separator, the proportion of large pores having a diameter of more than 50 nm may be less than 1%. The proportion of the large pores may be measured based on the entire surface area of the produced redox flow battery separator.

According to an exemplary embodiment of the present invention, the redox flow battery separator may have a thickness of 50 μm to 1,000 μm. Specifically, the redox flow battery separator may have a thickness of 100 μm to 800 μm, or 400 μm to 700 μm. When the redox flow battery separator has a thickness within the above range, the charge quantity reduction phenomenon may be suppressed by minimizing the crossover of the active materials. Furthermore, when the redox flow battery separator has a thickness within the above range, an appropriate voltage may be maintained by preventing the resistance from excessively increasing.

Yet another exemplary embodiment of the present invention provides a redox flow battery including the redox flow battery separator. Specifically, the redox flow battery may be a zinc-bromine redox flow battery.

The redox flow battery may include structures and configurations known in the art, except that the above-described separator is applied. For example, the redox flow battery may include: a unit cell including a separator and an electrode; a tank in which an electrolytic solution is stored; and a pump that circulates an electrolytic solution between the unit cell and the tank.

In addition, the redox flow battery may include a module including one or more of the unit cells. Furthermore, the redox flow battery may further a flow frame. The flow frame may not only serve as a passage for movement of the electrolytic solution, but also provide a uniform distribution of the electrolytic solution between the electrode and the separator such that the electrochemical reaction of an actual battery smoothly occurs. The flow frame may not only serve as a passage for movement of the electrolytic solution, but also provide a uniform distribution of the electrolytic solution between the electrode and the separator such that the electrochemical reaction of an actual battery smoothly occurs. The flow frame may be provided as a film having a thickness of 0.1 mm to 15.0 mm, which includes a polymer such as polyethylene, polypropylene or polyvinyl chloride.

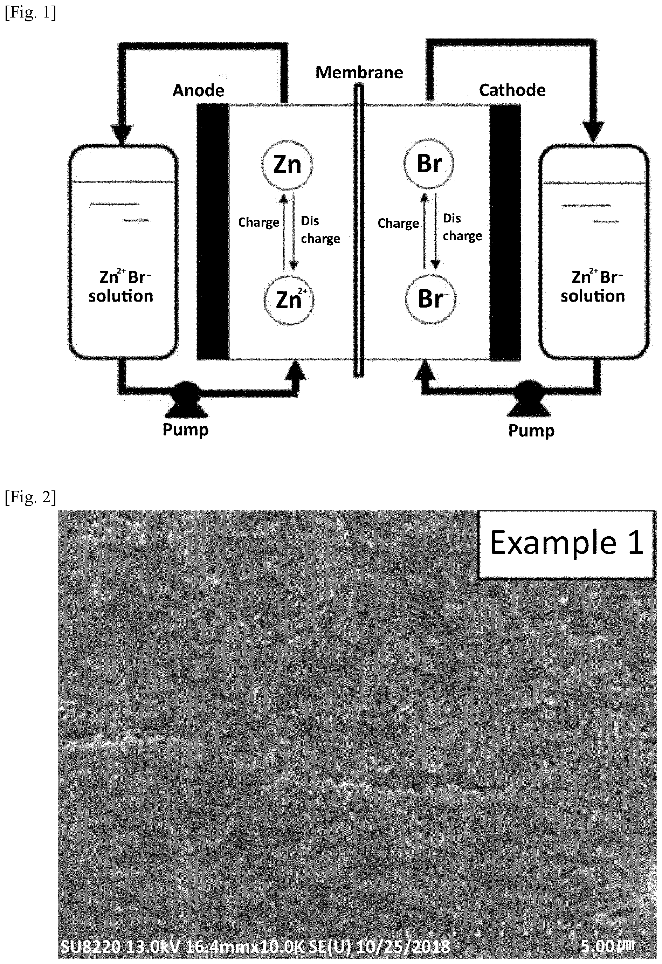

FIG. 1 illustrates a conceptual view of a general zinc-bromine redox flow battery. Specifically, FIG. 1 illustrates a zinc-bromine redox flow battery driven while supplying an electrolytic solution stored in an electrolytic tank to each of an anode region and a cathode region separated by a separator through a pump. As described above, the redox flow battery according to the present invention may have a structure such as the zinc-bromine redox flow battery illustrated in FIG. 1, except that the above-described separator is applied.

Hereinafter, the present invention will be described in detail with reference to Examples for specifically describing the present invention. However, the Examples according to the present invention may be modified into various different forms, and it should not be interpreted that the scope of the present invention is limited to the Examples to be described below. The Examples of the present specification are provided for more completely describing the present invention to those with ordinary skill in the art.

**[Example 1]**

A resin composition including 20 parts by weight of high-density polyethylene having a weight average molecular weight (Mw) of 600,000 g/mol, 20 parts by weight of hydrophilic fumed silica (manufactured by Evonik, A200, an average diameter of primary particles: 12 nm), 60 parts by weight of dioctyl phthalate (DOP) as a pore former, and 2 parts by weight of a maleic anhydride graft-polyethylene as a compatibilizing agent was prepared. The prepared resin composition was mixed at a temperature of 190°C to 210°C using a batch-type internal mixing device. Furthermore, a sheet-shaped separator having a thickness of 600 μm was obtained by extruding the obtained mixture between rolls whose surface temperature was controlled to about 80°C. Moreover, a separator was produced by impregnating the sheet-shaped separator in methylene chloride at room temperature for about 10 minutes to remove the pore former. In this case, the pore former is located around the silica, and then forms pores at the corresponding position while being extracted.

**[Example 2]**

A separator was produced in the same manner as in Example 1, except that the maleic anhydride graft-polyethylene, which is a compatibilizing agent, was included in an amount of 4 parts by weight.

**[Comparative Example 1]**

A separator was produced in the same manner as in Example 1, except that the maleic anhydride graft-polyethylene, which is a compatibilizing agent in Example 1, was not included in the resin composition.

**[Experimental Example 1: Morphological analysis of surface of separator]**

In order to analyze the surface morphology of the separators produced according to Example 1 and Comparative Example 1, the surface of the produced separator was coating-treated with osmium, and then analyzed using a field emission scanning electron microscope (FE-SEM, HITACHI SU8220).

FIG. 2 illustrates an FE-SEM image of the surface of a separator according to Example 1.

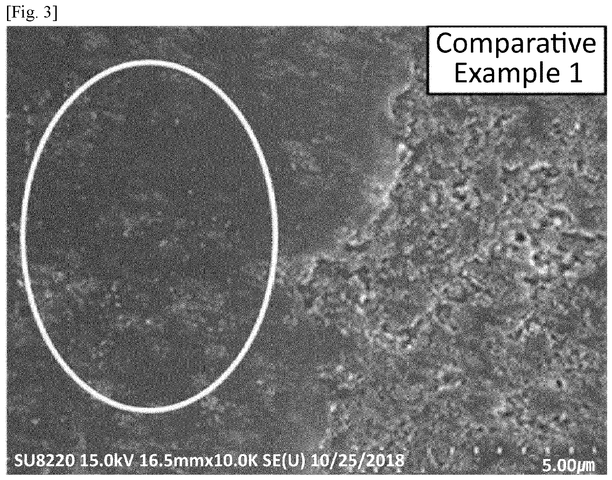

FIG. 3 illustrates an FE-SEM image of the surface of a separator for a redox flow battery according to Comparative Example 1.

According to FIGS. 2 and 3, it can be confirmed that in the separator according to Example 1, the compatibility of fumed silica and high-density polyethylene is increased, and thus the high-density polyethylene and the fumed silica hardly agglomerate, and furthermore, it can be confirmed that the separator according to Example 1 has much higher surface uniformity than the separator according to Comparative Example 1.

**[Experimental Example 2] Measurement of pore distribution**

In order to measure the pore distribution of the separators according to Comparative Example 1 and Example 1, a porometer (Porolux 1000) was used. Specifically, the flow rate of air according to a pressure of 1 bar to 35 bar was measured using a wetting solution (manufactured by POROMETER, Porefil® wetting fluid). Among the results of the measured pore sizes, the results of measuring the distribution proportion of large pores having a diameter of more than 50 nm are summarized in the following Table 1.

[Table 1]

|  | Proportion (%) of pores having diameter of more than 50 nm |
|---|---|
| Example 1 | 0.72 |
| Comparative Example 1 | 1.19 |

According to the results of Table 1, it can be confirmed that the separator according to Example 1 has a decreased proportion of large pores having a diameter of more than 50 nm compared to the separator according to Comparative Example 1 according to an improvement in distribution characteristics of and an increase in pore uniformity of the high-density polyethylene and the fumed silica.

**[Experimental Example 3: Measurement of efficiency of zinc-bromine redox flow battery]**

In order to measure the efficiency of a zinc-bromine redox flow battery, single batteries, to which the separators according to Example 1 and Comparative Example 1 were applied, were produced. Specifically, the single battery has a structure, in which a flow frame for forming a flow path such that an electrolytic solution can move on both sides of each of the separators, an electrode which allows electrons to move, and an end plate which maintains the shape of a single battery and serves as a support are sequentially stacked, and charging and discharging were performed by supplying an electrolytic solution in an electrolytic solution vessel to the single battery through a pump and applying electric current thereto through a charging and discharging device.

Charging and discharging were performed under conditions of a system total charge quantity of 2.98 Ah, an electrolytic solution utilization rate of 40% (SOC 40), a charge of 20 mA/cm$^2$, a discharge of 20 mA/cm$^2$, and 0.01 V or more using a product manufactured by WonATech Co., Ltd. as the charging and discharging device, and after one time of charging/discharging, a test was performed by setting one time of stripping as one cycle. The efficiency of the zinc-bromine redox flow battery measured as described above is shown in the following Table 2.

[Table 2]

|  | 3 cycle average efficiency [%] | | |
|---|---|---|---|
|  | Energy | Voltage | Charge quantity |
| Comparative Example 1 | 65.8 | 81.8 | 80.4 |
| Example 1 | 67.9 | 80.7 | 84.2 |
| Example 2 | 70.7 | 81.3 | 86.9 |

* Energy efficiency (EE) = (Discharge energy (W·h) / Charge energy (W·h)) × 100

* Voltage efficiency (VE) = (Energy efficiency / Charge quantity efficiency) × 100

* Charge quantity efficiency (Current efficiency (CE)) = (Discharge capacity

$(A \cdot h) / \text{Charge capacity} (A \cdot h)) \times 100$

According to the results of Table 2, the separator according to Example 1 had a decreased proportion of large pores (a diameter of more than 50 nm) which could be vulnerable to the crossover of bromine compounds produced during charging, and thus had increased charge quantity efficiency and energy efficiency compared to the separator according to Comparative Example 1. Likewise, since the separator according to Example 2 also had a formation of large pores suppressed by a maleic anhydride graft-polyethylene, which is a compatibilizing agent, and high surface uniformity due to a uniform pore distribution, the charge quantity efficiency and energy efficiency in the zinc-bromine redox flow battery were increased compared to the separator according to Comparative Example 1. For reference, since the large pores do not affect the movement of the uncharged active materials $Zn^{2+}$ and $Br^-$, Examples 1 and 2 and Comparative Example 1 showed the same result in terms of voltage efficiency.

**Claims**

1.   A resin composition for a redox flow battery separator, the resin composition comprising: a polyolefin-based resin; fumed silica; a compatibilizing agent comprising at least one selected from the group consisting of a maleic anhydride graft-polyethylene, a maleic acid graft-polyethylene, an alkyl maleate graft-polyethylene, a maleamic acid graft-polyethylene, and polyethylene oxide; and a pore former.

2.   The resin composition of claim 1, wherein a content of the compatibilizing agent is 1 part by weight or more and 40 parts by weight or less based on 100 parts by weight of the polyolefin-based resin.

3.   The resin composition of claim 1, wherein the polyolefin-based resin comprises at least one selected from the group consisting of polyethylene, polypropylene and an ethylene-propylene copolymer.

4.   The resin composition of claim 1, wherein the polyolefin-based resin has a weight average molecular weight of 100,000 g/mol or more and 10,000,000 g/mol or less.

5.    The resin composition of claim 1, wherein a content of the fumed silica is 50 parts by weight or more and 200 parts by weight or less based on 100 parts by weight of the polyolefin-based resin.

6.   The resin composition of claim 1, wherein the fumed silica comprises agglomerated particles containing primary particles having an average particle diameter of 1 nm to 100 nm.

7.   The resin composition of claim 1, wherein the fumed silica is a mixed silica of hydrophilic fumed silica and hydrophobic fumed silica.

8.   The resin composition of claim 1, wherein a content of the pore former is 50 parts by weight or more and 500 parts by weight or less based on 100 parts by weight of the polyolefin-based resin.

9.   The resin composition of claim 1, wherein the resin composition does not comprise a silane coupling agent.

10.   The resin composition of claim 1, further comprising at least one additive selected from among an antioxidant and a porosity improver.

11.   A method for producing a redox flow battery separator, the method comprising: (a) forming a sheet-shaped composite membrane using the resin composition for a redox flow battery separator of any one of claims 1 to 10; and (b) forming a plurality of pores in the composite membrane by removing a pore former in the composite membrane.

12.   A redox flow battery separator produced using the method of claim 11.

13.   The redox flow battery separator of claim 12, wherein a proportion of large pores having a diameter of more than 50 nm is less than 1%.

**14.** A redox flow battery comprising the redox flow battery separator of claim 12.

[Fig. 1]

[Fig. 2]

[Fig. 3]

## INTERNATIONAL SEARCH REPORT

| International application No. |
|---|
| **PCT/KR2019/016242** |

**A. CLASSIFICATION OF SUBJECT MATTER**

*H01M 8/0243(2016.01)i, H01M 8/0239(2016.01)i, H01M 8/1051(2016.01)i, H01M 8/1081(2016.01)i, H01M 8/18(2006.01)i*

According to International Patent Classification (IPC) or to both national classification and IPC

**B. FIELDS SEARCHED**

Minimum documentation searched (classification system followed by classification symbols)
H01M 8/0243; C08J 5/22; C08L 23/16; C08L 53/00; H01M 10/05; H01M 8/02; H01M 8/18; H01M 8/0239; H01M 8/1051; H01M 8/1081

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: compatibilizing agent, dry silica, polyolefin resin, pore forming agent, redox flow battery, separator

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0063887 A (LOTTE CHEMICAL CORPORATION) 07 June 2016<br>See paragraphs [0019]-[0076]. | 1-14 |
| Y | KR 10-0608482 B1 (IUCF-HYU (INDUSTRY-UNIVERSITY COOPERATION FOUNDATION HANYANG UNIVERSITY)) 02 August 2006<br>See paragraphs [0034]-[0062]. | 1-14 |
| Y | KR 10-2017-0037387 A (LOTTE CHEMICAL CORPORATION) 04 April 2017<br>See paragraphs [0052]-[0075], [0077]-[0097], [0099]-[0104], [0106]-[0111]. | 1-14 |
| A | KR 10-2014-0091107 A (SK INNOVATION CO., LTD.) 21 July 2014<br>See the entire document. | 1-14 |
| A | US 2014-0288225 A1 (ASAHI KASEI PLASTICS NORTH AMERICA, INC.)<br>25 September 2014<br>See the entire document. | 1-14 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 MARCH 2020 (24.03.2020) | **24 MARCH 2020 (24.03.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/016242**

| Patent document cited in search report | Publication date | Patent family member | Publication date |
|---|---|---|---|
| KR 10-2016-0063887 A | 07/06/2016 | KR 10-1629944 B1 | 13/06/2016 |
| KR 10-0608482 B1 | 02/08/2006 | WO 2006-132461 A1 | 14/12/2006 |
| KR 10-2017-0037387 A | 04/04/2017 | KR 10-1752889 B1 | 30/06/2017 |
| | | WO 2017-052230 A1 | 30/03/2017 |
| KR 10-2014-0091107 A | 21/07/2014 | CN 104937742 A | 23/09/2015 |
| | | CN 104937742 B | 06/03/2018 |
| | | JP 2016-510267 A | 07/04/2016 |
| | | JP 6551997 B2 | 31/07/2019 |
| | | KR 10-2035034 B1 | 23/10/2019 |
| | | US 2015-0333311 A1 | 19/11/2015 |
| | | US 2018-0102525 A1 | 12/04/2018 |
| | | US 9853273 B2 | 26/12/2017 |
| | | WO 2014-104677 A1 | 03/07/2014 |
| US 2014-0288225 A1 | 25/09/2014 | US 2014-0163154 A1 | 12/06/2014 |
| | | US 9580586 B2 | 28/02/2017 |

Form PCT/ISA/210 (patent family annex) (January 2015)

**EP 3 890 079 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4190707 A

- KR 1042931